# EUROPEAN PATENT SPECIFICATION

(11) **EP 4 330 930 B1**
(45) Date of publication and mention of the grant of the patent: **14.01.2026**
(21) Application number: 23766141.8
(22) Date of filing: 10.03.2023
(51) Int. Cl.: G06V 10/25, G06T 7/00, G06N 3/08, G06N 3/04, G06V 10/82, G06N 3/09, G06T 7/11, G06T 7/73, G06N 3/045

(54) **SYSTEMS AND METHODS FOR DETERMINING INFORMATION OF REGIONS OF INTEREST**
SYSTEME UND VERFAHREN ZUR BESTIMMUNG VON INFORMATIONEN ÜBER REGIONEN VON INTERESSE
SYSTÈMES ET PROCÉDÉS DE DÉTERMINATION D'INFORMATION DE RÉGIONS D'INTÉRÊT

(30) Priority: 10.03.2022 CN 202210236019
(43) Date of publication of application: 06.03.2024
(73) Proprietor: Shanghai United Imaging Healthcare Co., Ltd., Shanghai 201807 (CN)
(72) Inventor: YANG, Xiong, Shanghai 201807 (CN); SU, Saisai, Shanghai 201807 (CN); MAO, Yufei, Shanghai 201807 (CN); GONG, Zhenhuan, Shanghai 201807 (CN)
(74) Representative: Wang, Bo
(86) International application number: PCT/CN2023/080825
(87) International publication number: WO 2023/169564

(56) References cited:
- WO-A1-2022/032455
- CN-A- 111 489 353
- CN-A- 112 348 892
- CN-A- 114 677 503
- US-A1- 2018 144 475
- US-A1- 2019 133 544
- US-B2- 11 132 797

## Description

### CROSS-REFERENCE TO RELATED APPLICATIONS

This application claims priority to Chinese Patent Application No. 202210236019.0, filed on March 10, 2022.

### TECHNICAL FIELD

The present disclosure generally relates to image processing, and more particularly, relates to systems and methods for determining information of a region of interest (ROI).

### BACKGROUND

In recent years, the incidence and mortality rate of cerebrovascular diseases have been increasing year by year. Atherosclerotic plaques in the head and neck vessels are the main cause of cerebrovascular diseases (e.g., an ischemic stroke), and rapid and accurate detection of the atherosclerotic plaques may be important for early intervention. However, the detection of the atherosclerotic plaques involves a lot of user intervention, which is inefficient and inaccurate. Therefore, it is desirable to provide systems and methods for automatically determining information of regions of interest (e.g., the atherosclerotic plaques), thereby improving the efficiency and accuracy of ROI detection.

US 2019/133544 A1 relates to a method and system for reducing radiation does in image acquisition. The method includes: obtaining first image data of a subject related to a first scan of the subject, the first scan being of a first type of scan; reconstructing a first image of the subject based on the first image data and generating a dose plan of a second scan based on the first image, the second scan being of a second type of scan; obtaining second image data of the subject related to the second scan of the subject, the second scan being performed according to the does plan. WO 2022/032455 A1 discloses methods for automated scan preparation and real-time monitoring/adjustment in medical imaging. The automated scan preparation includes: positioning a target subject to be scanned by a medical imaging device, determining a rotation scheme of the medical imaging device, targeting a scan region of the target subject with an imaging isocenter of the medical imaging device, determining target position (s) of component (s) of the medical imaging device, performing a virtual scan, generating a reference subject model representing an internal structure of the target subject, or the like.

### SUMMARY

The invention is set out in the appended set of claims.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an exemplary imaging system according to some embodiments of the present disclosure;
FIG. 2 is a block diagram illustrating an exemplary processing device according to some embodiments of the present disclosure;
FIG. 3 is a flowchart illustrating an exemplary process for determining information of an ROI of a target subject according to some embodiments of the present disclosure;
FIG. 4 is a schematic diagram illustrating an exemplary first determination model according to some embodiments of the present disclosure;
FIG. 5 is a schematic diagram illustrating an exemplary second determination model according to some embodiments of the present disclosure;
FIG. 6A is a schematic diagram illustrating an exemplary process for determining detection information of an ROI according to some embodiments of the present disclosure;
FIG. 6B is a schematic diagram illustrating an exemplary process for determining detection information of an ROI according to some embodiments of the present disclosure;
FIG. 6C is a schematic diagram illustrating an exemplary process for determining detection information of an ROI according to some embodiments of the present disclosure;
FIG. 7 is a flowchart illustrating an exemplary process for generating a second determination model according to some embodiments of the present disclosure;
FIG. 8 is a flowchart illustrating an exemplary process for evaluating a status of an ROI according to some embodiments of the present disclosure;
FIG. 9 is a flowchart illustrating an exemplary process for determining whether one or more second scans need to be re-performed according to some embodiments of the present disclosure; and
FIG. 10 is a schematic diagram illustrating an exemplary computing device according to some embodiments of the present disclosure.

### DETAILED DESCRIPTION

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that when a unit, engine, module, or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

In the present disclosure, the term "image" may refer to a two-dimensional (2D) image, a three-dimensional (3D) image, or a four-dimensional (4D) image (e.g., a time series of 3D images). In some embodiments, the term "image" may refer to an image of a region (e.g., an ROI) of a subject. In some embodiment, the image may be a medical image, an optical image, etc.

In the present disclosure, a representation of a subject (e.g., an object, a patient, or a portion thereof) in an image may be referred to as "subject" for brevity. For instance, a representation of an organ, tissue (e.g., a heart, a liver, a lung), or an ROI in an image may be referred to as the organ, tissue, or ROI, for brevity. Further, an image including a representation of a subject, or a portion thereof, may be referred to as an image of the subject, or a portion thereof, or an image including the subject, or a portion thereof, for brevity. Still further, an operation performed on a representation of a subject, or a portion thereof, in an image may be referred to as an operation performed on the subject, or a portion thereof, for brevity. For instance, a segmentation of a portion of an image including a representation of an ROI from the image may be referred to as a segmentation of the ROI for brevity.

Normally, whether a blood vessel includes a plaque needs to be analyzed manually based on medical images (e.g., vascular images of blood vessels), which is inefficient and susceptible to human errors.

In order to reduce labor consumption and improve the efficiency and accuracy of the determination of information of an ROI (e.g., a plaque), the present disclosure provides systems and methods for automatically determining information of the ROI. The methods include determining positioning information of the ROI of a target subject by processing first medical imaging data of the target subject using a first determination model. The first medical imaging data is acquired by performing a first scan with a first FOV on the target subject. The methods include acquiring second medical imaging data of the target subject by performing one or more second scans with a second FOV on the target subject based on the positioning information of the ROI. The second FOV may be smaller than the first FOV. Further, the methods include determining, based on the second medical imaging data, detection information of the ROI. For example, the detection information may be determined by processing the second medical imaging data using a second determination model.

By determining the positioning information of the ROI, the second medical imaging data may be acquired by performing the second scan(s) with a smaller scanning range. The second medical imaging data may have a higher resolution and more detailed information of the ROI than the first medical imaging data, therefore the detection information of the ROI determined based on the second medical imaging data may have an improved accuracy and reliability. In addition, the information (e.g., the positioning information and/or the detection information) of the ROI may be determined automatically based on the first determination model and/or the second determination model, which can reduce time and/or labor consumption, and improve the efficiency and accuracy of information determination.

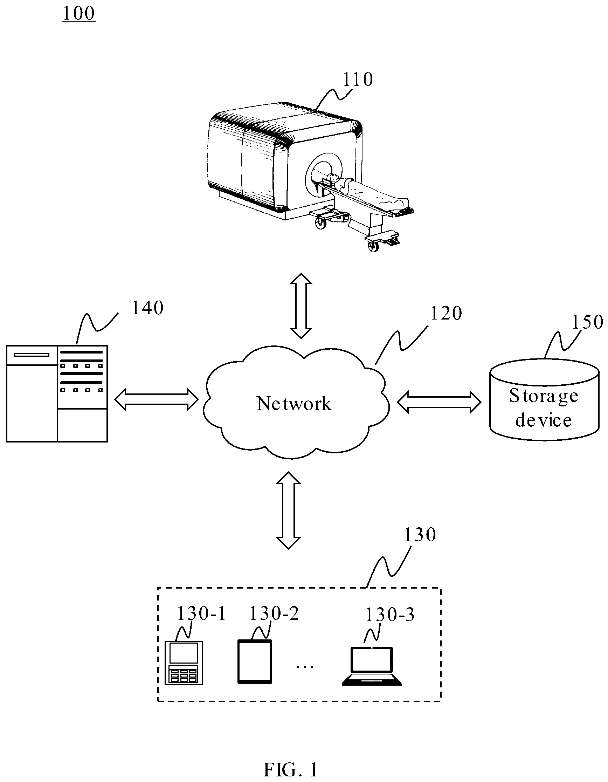

FIG. 1 is a schematic diagram illustrating an exemplary imaging system 100 according to some embodiments of the present disclosure. As shown in FIG. 1, the imaging system 100 may include an imaging device 110, a network 120, one or more terminals 130, a processing device 140, and a storage device 150. In some embodiments, the imaging device 110, the processing device 140, the storage device 150, and/or the terminal(s) 130 may be connected to and/or communicate with each other via a wireless connection (e.g., the network 120), a wired connection, or a combination thereof. The connection between the components in the imaging system 100 may be variable. Merely by way of example, the imaging device 110 may be connected to the processing device 140 through the network 120, as illustrated in FIG. 1. As another example, the imaging device 110 may be connected to the processing device 140 directly. As a further example, the storage device 150 may be connected to the processing device 140 through the network 120, as illustrated in FIG. 1, or connected to the processing device 140 directly.

The imaging device 110 may be configured to generate or provide image data by scanning a target subject or at least a part of the target subject (e.g., an ROI) of the target subject). For example, the imaging device 110 may perform a first scan with a first field of view (FOV) on the target subject to acquire a first medical image. As another example, the imaging device 110 may perform one or more second scans with a second FOV on the target subject to acquire one or more second medical images of the target subject.

In some embodiments, the imaging device 110 may include a single modality imaging device. For example, the imaging device 110 may include a positron emission tomography (PET) device, a single-photon emission computed tomography (SPECT) device, a computed tomography (CT) device, a magnetic resonance imaging (MRI) device, a digital subtraction angiography (DSA) system, an intravascular ultrasound (IVUS) device, etc. In some embodiments, the imaging device 110 may include a multi-modality imaging device. Exemplary multi-modality imaging devices may include a positron emission tomography-computed tomography (PET-CT) device, a positron emission tomography-magnetic resonance imaging (PET-MRI) device, a single-photon emission computed tomography-computed tomography (SPECT-CT) device, a digital subtraction angiography-computed tomography (DSA-CT) system, a digital subtraction angiography-positron emission tomography (DSA-PET) system, a digital subtraction angiography-magnetic resonance imaging (DSA-MRI) system, a single photon emission computed tomography-magnetic resonance imaging (SPECT-MRI), etc. The multi-modality scanner may perform multi-modality imaging simultaneously or in sequence. For example, the PET-CT device may generate structural X-ray CT image data and functional PET image data simultaneously or in sequence. The PET-MRI device may generate MRI data and PET data simultaneously or in sequence. It should be noted that the imaging system described below is merely provided for illustration purposes, and is not intended to limit the scope of the present disclosure.

Merely by way of example, the imaging device 110 may be an MRI scanner. The MRI scanner may be configured to scan a target subject (or a part of the target subject) to acquire scan data, such as magnetic resonance (MR) signals associated with the target subject. For example, the MRI scanner may detect a plurality of MR signals by applying an MRI sequence on the target subject. In some embodiments, the MRI scanner may include, for example, a magnetic body, a gradient coil assembly, an RF coil assembly, etc. In some embodiments, the MRI scanner may be a permanent magnet MRI scanner, a superconducting electromagnet MRI scanner, or a resistive electromagnet MRI scanner, etc., according to types of the magnetic body. In some embodiments, the MRI scanner may be a high-field MRI scanner, a mid-field MRI scanner, a low-field MRI scanner, etc., according to the intensity of the magnetic field.

The target subject may include patients or other experimental subjects (e.g., experimental mice or other animals). In some embodiments, the target subject may be a patient or a specific portion, organ, and/or tissue of the patient. For example, the target subject may include the head, the neck, the thorax, the heart, the stomach, a blood vessel, soft tissue, a tumor, nodules, or the like, or any combination thereof. In some embodiments, the target subject may be non-biological. For example, the target subject may include a phantom, a man-made object, etc. The terms "object" and "subject" are used interchangeably in the present disclosure.

The network 120 may include any suitable network that can facilitate the exchange of information and/or data for the imaging system 100. In some embodiments, one or more components (e.g., the imaging device 110, the terminal 130, the processing device 140, the storage device 150, etc.) of the imaging system 100 may communicate information and/or data with one or more other components of the imaging system 100 via the network 120. For example, the processing device 140 may obtain image data from the imaging device 110 via the network 120. As another example, the processing device 140 may obtain user instructions from the terminal 130 via the network 120. In some embodiments, the network 120 may include one or more network access points.

The terminal(s) 130 may include a mobile device 130-1, a tablet computer 130-2, a laptop computer 130-3, or the like, or any combination thereof. In some embodiments, the mobile device 130-1 may include a smart home device, a wearable device, a mobile device, a virtual reality device, an augmented reality device, or the like, or any combination thereof. In some embodiments, the terminal(s) 130 may be part of the processing device 140.

The processing device 140 may process data and/or information obtained from one or more components (the imaging device 110, the terminal(s) 130, and/or the storage device 150) of the imaging system 100. For example, the processing device 140 may determine detection information of an ROI of a target subject by processing medical imaging data of the target subject. As another example, the processing device 140 may generate one or more machine learning models that can be used in the determination of the detection information. In some embodiments, the processing device 140 may be a single server or a server group. The server group may be centralized or distributed. In some embodiments, the processing device 140 may be local or remote. In some embodiments, the processing device 140 may be implemented on a cloud platform.

In some embodiments, the processing device 140 may be implemented by a computing device. For example, the computing device may include a processor, a storage, an input/output (I/O), and a communication port. The processor may execute computer instructions (e.g., program codes) and perform functions of the processing device 140 in accordance with the techniques described herein. The computer instructions may include, for example, routines, programs, objects, components, data structures, procedures, modules, and functions, which perform particular functions described herein. In some embodiments, the processing device 140, or a portion of the processing device 140 may be implemented by a portion of the terminal 130.

In some embodiments, the processing device 140 may include multiple processing devices. Thus, operations and/or method steps that are performed by one processing device as described in the present disclosure may also be jointly or separately performed by the multiple processing devices. For example, if in the present disclosure, the prompting system 100 executes both operation A and operation B, it should be understood that operation A and operation B may also be performed by two or more different processing devices jointly or separately (e.g., a first processing device executes operation A and a second processing device executes operation B, or the first and second processing devices jointly execute operations A and B).

The storage device 150 may store data/information obtained from the imaging device 110, the terminal(s) 130, and/or any other component of the imaging system 100. In some embodiments, the storage device 150 may include a mass storage, a removable storage, a volatile read-and-write memory, a read-only memory (ROM), or the like, or any combination thereof. In some embodiments, the storage device 150 may store one or more programs and/or instructions to perform exemplary methods described in the present disclosure.

In some embodiments, the storage device 150 may be connected to the network 120 to communicate with one or more other components in the imaging system 100 (e.g., the processing device 140, the terminal(s) 130, etc.). One or more components in the imaging system 100 may access the data or instructions stored in the storage device 150 via the network 120. In some embodiments, the storage device 150 may be directly connected to or communicate with one or more other components in the imaging system 100 (e.g., the processing device 140, the terminal(s) 130, etc.). In some embodiments, the storage device 150 may be part of the processing device 140.

In some embodiments, the imaging system 100 may include one or more additional components and/or one or more components of the imaging system 100 described above may be omitted. Additionally or alternatively, two or more components of the imaging system 100 may be integrated into a single component. A component of the imaging system 100 may be implemented on two or more sub-components.

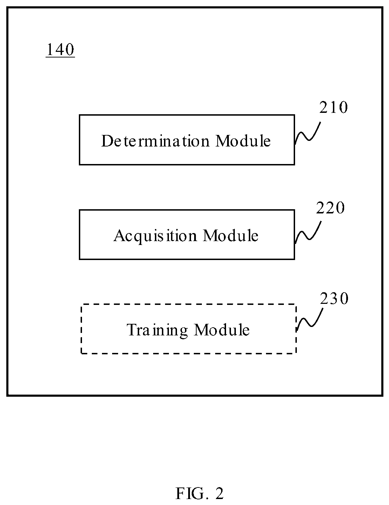

FIG. 2 is a block diagram illustrating an exemplary processing device 140 according to some embodiments of the present disclosure. In some embodiments, the processing device 140 may be in communication with a computer-readable storage medium (e.g., the storage device 150 illustrated in FIG. 1) and the modules of the processing device 140 may execute instructions stored in the computer-readable storage medium.

As illustrated in FIG. 2, the processing device 140 may include a determination module 210 and an acquisition module 220.

The determination module 210 may be configured to determine positioning information of an ROI of a target subject by processing first medical imaging data of the target subject. The first medical imaging data may be acquired by performing a first scan with a first field of view (FOV) on the target subject. More descriptions regarding the determination of the positioning information may be found elsewhere in the present disclosure. See, e.g., operation 302 and relevant descriptions thereof.

The acquisition module 220 may be configured to acquire second medical imaging data of the target subject by performing one or more second scans with a second FOV on the target subject based on the positioning information of the ROI. The second FOV may be smaller than the first FOV. More descriptions regarding the acquisition of the second medical imaging data may be found elsewhere in the present disclosure. See, e.g., operation 304 and relevant descriptions thereof.

In some embodiments, the determination module 210 may be further configured to determine, based on the second medical imaging data, detection information of the ROI. More descriptions regarding the determination of the detection information of the ROI may be found elsewhere in the present disclosure. See, e.g., operation 306 and relevant descriptions thereof.

In some embodiments, the processing device 140 may further include a training module 230. The training module 230 may be configured to generate one or more machine learning models that can be used in the determination of information (e.g., the positioning information, the detection information, etc.) of the ROI, such as the first determination model and/or the second determination model. In some embodiments, the training module 230 may be implemented on the processing device 140 or a processing device other than the processing device 140. In some embodiments, the training module 230 and other modules (e.g., the determination module 210 and the acquisition module 220) may be implemented on a same processing device (e.g., the processing device 140). Alternatively, the training module 230 and other modules (e.g., the determination module 210 and/or the acquisition module 220) may be implemented on different processing devices. For example, the training module 230 may be implemented on a processing device of a vendor of the machine learning model(s), while the other modules may be implemented on a processing device of a user of the machine learning model(s).

In some embodiments, the processing device 140 may include one or more other modules. For example, the processing device 140 may include a storage module to store data generated by the modules in the processing device 140. In some embodiments, any two of the modules may be combined as a single module, and any one of the modules may be divided into two or more units.

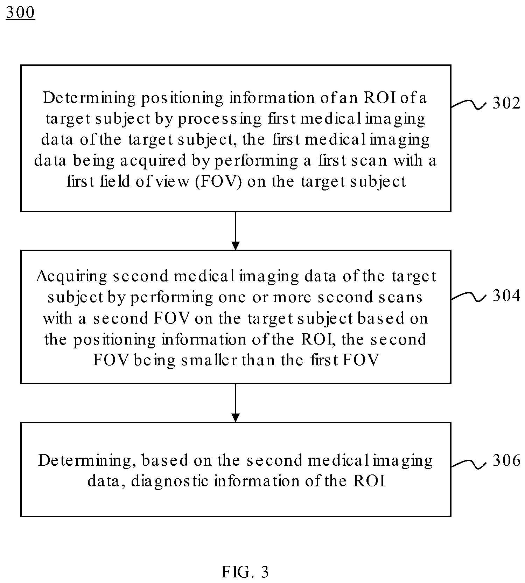

FIG. 3 is a flowchart illustrating an exemplary process 300 for determining information of an ROI of a target subject according to some embodiments of the present disclosure.

In 302, the processing device 140 (e.g., the determination module 210) determines positioning information of the ROI of the target subject by processing first medical imaging data of the target subject. The first medical imaging data is acquired by performing a first scan with a first field of view (FOV) on the target subject.

In some embodiments, the first medical imaging data may be vascular imaging data of blood vessels of the target subject. For example, the first medical imaging data may include first scan data, a first medical image, etc. In some embodiments, the first medical image may be a vascular image of blood vessels of the target subject. For example, the first medical image may include a two-dimensional (2D) image, a three-dimensional (3D) image (e.g., including a plurality of 2D images (or slices)), a four-dimensional (4D) image (e.g., including a plurality of 3D images captured at a series of time points), etc., including information of the blood vessels. In some embodiments, the blood vessels may be of various types. For example, the blood vessels may include arterial blood vessel(s), venous blood vessel(s), and/or capillary(capillaries). In some embodiments, the blood vessels may include a lesion (an exemplary ROI), such as, a plaque, an ulceration, a thrombosis, an inflammation, an obstruction, a tumor, etc.

In some embodiments, the first medical imaging data may be acquired by a first imaging device (e.g., the imaging device 110). For example, the first medical imaging data may be acquired by an MRI device, a CT device, a DSA device, an IVUS device, or the like, or any combination thereof. Taking an MRI device as an example, the first medical imaging data may include MR scan data and/or an MR image acquired according to a scanning sequence. Exemplary scanning sequences may include a T1 sequence, a T1CE sequence, a T2 sequence, a proton density sequence, a simultaneous non-contrast angiography and intraplaque hemorrhage (SNAP) sequence, a time of flight (TOF) sequence, a contrast-enhanced magnetic resonance angiography (CEMRA) sequence, or the like, or any combination thereof. The scanning sequence refers to an MRI sequence applied by the MRI device on the target subject. The scanning sequence may be defined by parameters relating to the arrangement of components (e.g., a pulse sequence, a gradient) of the scanning sequence. For example, the scanning sequence may be defined by one or more parameters relating to time, such as a repetition time (TR), an acquisition time (TA), an echo time (TE), etc. As another example, the scanning sequence may be defined by one or more parameters relating to the resolution corresponding to the medical imaging data (e.g., the first medical image).

In some embodiments, the processing device 140 may obtain the first medical imaging data by causing the first imaging device to perform the first scan with the first FOV on the target subject. An FOV of a scan may refer to the dimensions of the scanned portion of the target subject scanned by an imaging device during the scan, wherein the scanned portion of the target subject may be displayed in medical imaging data (e.g., a medical image) acquired by the scan. For example, the first FOV may cover the whole target subject, and the first medical image may display the whole target subject. In some embodiments, the first scan may be a fast scout scan and the first medical image may have a relatively low resolution.

In some embodiments, the first medical imaging data may be previously generated and stored in a storage device (e.g., the storage device 150, an external storage device, etc.). The processing device 140 may retrieve the first medical imaging data from the storage device.

The ROI refers to a region of the target subject that needs to be treated or diagnosed. For example, the ROI may include a region that includes lesion (e.g., a tumor, a cancer-ridden organ, inflammation, etc.) of the target subject. Merely by way of example, the target subject may be the head of the target subject including blood vessels (e.g., arterial blood vessel(s), venous blood vessel(s), and/or capillary(capillaries)), and the ROI may be a lesion region (e.g., a plaque, an aneurysm, a sandwich region, an ulceration, a thrombosis, an inflammation region, an obstruction, a tumor, etc.) in the head. In some embodiments, the first medical imaging data (e.g., the first medical image) may include a plurality of ROIs. For example, when the blood vessels include a plurality of plaques, the first medical imaging data (e.g., the first medical image) may include a plurality of ROIs.

The positioning information of the ROI refers to information that can position the ROI in the target subject. For example, the positioning information may include a location (e.g., coordinates), a contour, a shape, a height, a width, a thickness, an area, a volume, a ratio of height to width, or the like, or any combination thereof, of the ROI in the target subject. Merely by way of example, the positioning information may include coordinates of one or more feature points (e.g., boundary points, a central point, a center of gravity) of the ROI.

In some embodiments, the positioning information may be determined based on the first medical imaging data. For example, the positioning information may be determined by segmenting the ROI from the first medical image. In some embodiments, the positioning information may be determined using a first determination model. The first determination model may be a trained machine learning model. Merely by way of example, the processing device 140 may input the first medical imaging data (e.g., the first medical image) of the target subject into the first determination model, and the first determination model may output the positioning information of the ROI of the target subject or other information (e.g., a segmentation mask of the ROI) that can be used to determine the positioning information.

In some embodiments, the first determination model may refer to a process or an algorithm used for determining the positioning information of the ROI based on the first medical imaging data. The first determination model may be a trained machine learning model. Exemplary machine learning models may include a convolutional neural network (CNN) model, a recurrent neural network (RNN) model, a long short term memory (LSTM) network model, a fully convolutional neural network (FCN) model, a generative adversarial network (GAN) model, a radial basis function (RBF) machine learning model, a DeepMask model, a SegNet model, a dilated convolution model, a conditional random fields as recurrent neural networks (CRFasRNN) model, a pyramid scene parsing network (pspnet) model, or the like, or any combination thereof.

In some embodiments, the first determination model may include a multi-layer structure. For example, the first determination model may include an input layer, an output layer, and one or more convolution layers between the input layer and the output layer. In some embodiments, the input layer and the one or more convolution layers may be connected through one or more units. For example, the one or more units may include a convolution unit, a batch normalization unit, a rectified-linear unit (ReLU), a pooling unit (e.g., a max pooling (MP) unit), or the like, or any combination thereof. As used herein, a layer of a model refers to an algorithm or a function for processing input data of the layer. Different layers may perform different kinds of processing on their respective inputs. A layer may use output data from a previous layer as input data. In some embodiments, the convolutional layer may include a plurality of kernels, which may be used for feature extraction. In some embodiments, each kernel of the plurality of kernels may filter a portion (i.e., a region) of ins input. In some embodiments, one or more operations may be performed between the one or more convolution layers and the output layer. For example, the one or more operations may include a thresholding operation, a key point output operation, an area output operation, or the like, or any combination thereof. As used herein, the thresholding operation may refer to an operation for identifying a region from an output of the one or more convolution layers, wherein values of points in the region may be greater or smaller than a threshold. The threshold may be determined based on a system default setting or set manually by a user. The key point output operation may refer to an operation for output coordinates of one or more feature points of the ROI. The area output operation may refer to an operation for outputting an area (i.e., a size) of the ROI.

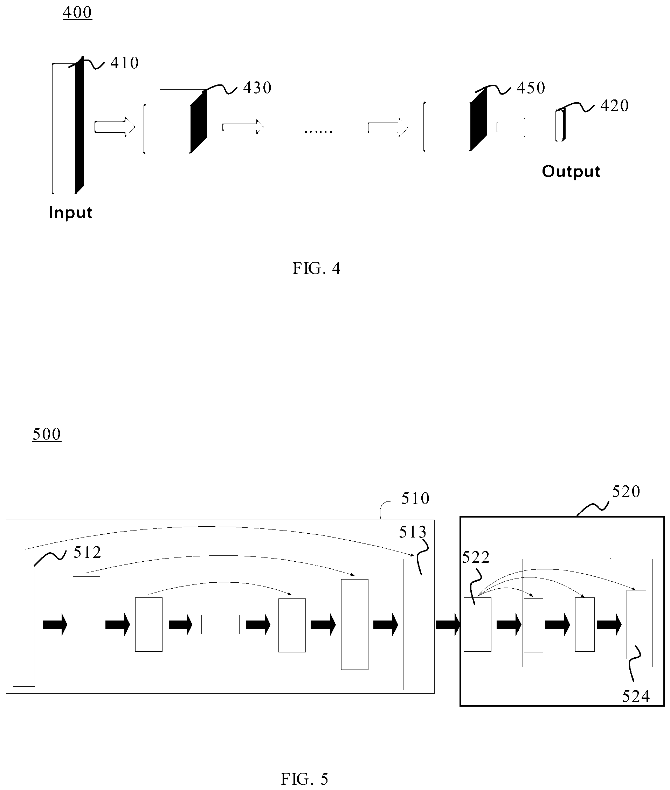

Merely by way of example, as illustrated in FIG. 4, FIG. 4 is a schematic diagram illustrating an exemplary first determination model 400 according to some embodiments of the present disclosure. The first determination model 400 may include an input layer 410, an output layer 420, and one or more convolution layers (e.g., a layer 430, ..., a layer 450) between the input layer 410 and the output layer 420. As used herein, first medical imaging data (e.g., a first medical image) of a target subject may be input into the input layer 410 of the first determination model 400, and the output layer 420 of the first determination model 400 may output positioning information of an ROI of the target subject or other information (e.g., a segmentation mask of the ROI) that can be used to determine the positioning information.

In some embodiments, the processing device 140 may obtain the first determination model from a storage device (e.g., the storage device 150) of the imaging system 100 or a third-party database. In some embodiments, the first determination model may be generated by the processing device 140 or another computing device according to a machine learning algorithm. In some embodiments, the first determination model may be generated by a computing device (e.g., the processing device 140) by training a first initial model using a plurality of first training samples for generating the first determination model disclosed herein. Each of the plurality of first training samples may include sample first medical imaging data (e.g., a sample first medical image) of a sample subject and sample positioning information of a sample ROI of the sample subject. For a first training sample, the sample first medical imaging data of the sample subject may be obtained in a similar manner as how the first medical imaging data is obtained as described above. The sample positioning information of the sample ROI may be determined automatically or manually. For example, a user may label the sample ROI in the sample first medical image and determine the corresponding sample positioning information via a user terminal that displays the sample first medical image. As another example, the processing device 140 may determine the sample positioning information of the sample ROI by identifying the sample ROI of the sample subject from the sample first medical image using an image segmentation algorithm. Optionally, the sample positioning information of the sample ROI and/or the sample ROI determined based on the preset algorithm may be confirmed or modified by the user. In some embodiments, each of the plurality of first training samples may further include other sample information (e.g., a sample segmentation mask of the sample ROI).

In 304, the processing device 140 (e.g., the acquisition module 220) acquires second medical imaging data of the target subject by performing one or more second scans with a second FOV on the target subject based on the positioning information of the ROI. The second FOV may be smaller than the first FOV.

In some embodiments, the second medical imaging data may be vascular imaging data of blood vessels of the target subject. For example, the second medical imaging data may include second scan data, one or more second medical images, etc. The second medical imaging data may be acquired in a similar manner as how the first medical imaging data is acquired. The difference between the first medical imaging data and the second medical imaging data may be that the second medical imaging data correspond to a smaller part of the target subject than the first medical imaging data because the second scan(s) are performed with the second FOV smaller than the first FOV. For example, the first FOV may cover the whole target subject, and the second FOV may cover a part of the target subject including the ROI of the target subject. Merely by way of example, the first FOV may cover the head, and the second FOV may cover some blood vessels in the head that includes plaques. In some embodiments, a first resolution corresponding to the first medical imaging data may be smaller than a second resolution corresponding to the second medical imaging data. For example, the second medical image(s) may have a higher resolution than the first medical image.

In some embodiments, the second medical imaging data may be acquired by one or more second imaging devices (e.g., the imaging device 110). For example, the one or more second medical images may be acquired by one or more of an MRI device, a CT device, a DSA device, an IVUS device, etc. In some embodiments, the first imaging device may be the same as the one or more second imaging devices. For example, both the first imaging device and the one or more second imaging devices may be an MRI device. As another example, the first imaging device may be a first scanner of a multi-modality imaging device, and the one or more second imaging devices may be the first scanner or other scanner(s) of the multi-modality imaging device. In some embodiments, the first imaging device may be different from the one or more second imaging devices. For example, the first imaging device may be an MRI device, and the one or more second imaging devices may be a CT device, a DSA device, an IVUS device, etc., other than the MRI device. In some embodiments, the processing device 140 may obtain the second medical imaging data (e.g., the one or more second medical images) from the one or more second imaging devices or a storage device. Alternatively, the processing device 140 may reconstruct the second medical image(s) based the second scan data collected in the second scan(s).

In some embodiments, the processing device 140 may determine the second FOV based on the positioning information of the ROI. For example, the position of the second FOV may be determined based on the location of the ROI, and the size of the second FOV may be determined based on the size of the ROI.

In some embodiments, the processing device 140 may obtain an updated scanning protocol by updating a scanning protocol based on the positioning information of the ROI, and cause the one or more second imaging devices to perform the second scan(s) on the target subject based on the updated scanning protocol. The scanning protocol may include scanning parameters to be used by the one or more second imaging devices in the second scan(s). For example, the scanning protocol may include a FOV, a scanning region, a scanning sequence, an imaging modality, feature information of the target subject (e.g., a gender, a body shape), or the like, or any combination thereof. Merely by way of example, the scanning protocol may be previously generated (e.g., manually input by a user or determined by the processing device 140). The processing device 140 may update the scanning protocol based on the positioning information of the ROI. For example, the processing device 140 may reduce the FOV of the scanning protocol to the second FOV, adjust the scanning sequence (e.g., by improving the resolution, designating another scanning sequence), etc.

In some embodiments, the second medical imaging data includes a plurality of sets of second medical imaging data. The second medical imaging data includes at least a first subset acquired using a first scanning protocol and a second subset acquired using a second scanning protocol different from the first scanning protocol. As used herein, at least one parameter (e.g., the FOV, the scanning region, the scanning sequence, the imaging modality, etc.) of the second scanning protocol is different from that of the first scanning protocol. For example, the second medical imaging data may at least include a first subset acquired using a first imaging modality and a second subset acquired using a second imaging modality different from the first imaging modality. Merely by way of example, the first imaging modality may be the MR or the CT, and the second imaging modality may be the PET. As another example, the second medical imaging data may at least include a first subset acquired using a first scanning sequence and a second subset acquired using a second scanning sequence different from the first scanning sequence. Merely by way of example, the first scanning sequence may include a T2 sequence, etc., and the second scanning sequence may an apparent diffusion coefficient (ADC) sequence, a diffusion weighted imaging (DWI) sequence, etc. As another example, the first scanning sequence may be a dark blood imaging sequence, such as, a T1 sequence, a T1CE sequence, a T2 sequence, a proton density sequence, etc., and the second scanning sequence may be a bright blood imaging sequence, such as, a TOF sequence, a CEMRA sequence, etc.

Second medical imaging data in the first subset and second medical imaging data in the second subset may provide different information. For example, the second medical imaging data in the first subset (e.g., a CT image, a T2 image) may provide more structural (or anatomical) information of the target subject than the second medical imaging data in the second subset (e.g., a PET image, an ADC image, a DWI image), and the second medical imaging data in the second subset may provide more functional information of the target subject than the second medical imaging data in the first subset.

By performing the second scan(s) with the second FOV on the target subject based on the positioning information of the ROI, the scanned portion of the target subject may be reduced. That is, the second medical imaging data may be acquired by scanning a smaller region of the target subject, and thus include more detail information of the ROI, thereby improving the accuracy of subsequent detection information of the ROI determined based on the second medical imaging data. In addition, by updating the scanning protocol, the second resolution corresponding to the second medical imaging data may be larger than the first resolution of the first medical imaging data. Since the first medical imaging data is obtained by scanning the target subject over a large area and at a low resolution, the scanning efficiency may be improved without affecting the determination of the positioning information of the ROI and subsequent determination of the detection information.

In 306, the processing device 140 (e.g., the determination module 210) determines, based on the second medical imaging data, detection information of the ROI.

The detection information may include information, such as the size, the position, the severity degree, the shape, the ingredient, or the like, or any combination thereof, of the ROI. Merely by way of example, the ROI may be a plaque, and the detection information of the ROI may include composition(s) of the plaque, a percentage of each composition of the plaque, a stability of the plaque, a morphology of the plaque, a degree of enhancement of the plaque, a stenosis rate of a blood vessel where the plaque is located, or the like, or any combination thereof. The composition(s) of the plaque may include lipid, calcification, fibrous cap, etc. The stability of the plaque may refer to whether the plaque is prone to breakage. The morphology of the plaque may include a size, an area, a volume, etc., of the plaque. The stenosis rate may refer to a blockage degree of the blood vessel caused by the plaque. In some embodiments, the detection information of the ROI may be expressed in the form of numerical quantification. For example, the stenosis rate may be expressed as a value in a range from "0" and "1," wherein the value "0" may indicate that the blood vessel is not blocked, the value "1" may indicate that the blood vessel is completely blocked, and a value between 0 and 1 may indicate that the blood vessel is partially blocked. As the value increases, the blockage degree may increase.

In some embodiments, the processing device 140 may determine the detection information of the ROI by inputting the second medical imaging data into a second determination model. For example, the processing device 140 may input the second medical image(s) of the target subject into the second determination model, and the second determination model may output the detection information of the ROI of the target subject.

In some embodiments, the second determination model refers to a process or an algorithm for determining the detection information of the ROI based on the second medical imaging data. The second determination model is a trained machine learning model. In some embodiments, the second determination model may include only a single neural network model. The single neural network model may process the second medical imaging data to determine the detection information of the ROI. For example, the second determination model may include a convolutional neural network (CNN) model, a recurrent neural network (RNN) model, a long short term memory (LSTM) network model, a fully convolutional neural network (FCN) model, a generative adversarial network (GAN) model, a radial basis function (RBF) machine learning model, a DeepMask model, a SegNet model, a dilated convolution model, a conditional random fields as recurrent neural networks (CRFasRNN) model, a pyramid scene parsing network (pspnet) model, or the like, or any combination thereof.

In some embodiments, the second determination model may include a plurality of neural network models that are sequentially connected. For example, the second determination model may include a segmentation component and a detection information determination component downstream to the segmentation component. The output of the segmentation component may be fed into the detection information determination component as an input. The segmentation component may be configured to generate at least one first segmentation image of a reference region relating to the ROI from the second medical imaging data, and the detection information determination component may be configured to determine the detection information of the ROI by processing the at least one first segmentation image (or the second medical imaging data and the first segmentation image(s). For example, the segmentation component may be configured to generate at least one first segmentation image of a reference region relating to the ROI from the second medical image(s), and the detection information determination component may be configured to determine the detection information of the ROI by processing the first segmentation image(s) (or the second medical image(s) and the first segmentation image).

In some embodiments, the processing device 140 may input the second medical imaging data (e.g., the second medical image(s)) of the target subject into the segmentation component, and the segmentation component may output the at least one first segmentation image of the reference region relating to the ROI from the second medical imaging data. The reference region may refer to a region of the target subject that includes or is near the ROI. For example, if the ROI is a plaque, the reference region may include a vascular wall of the blood vessel where the plaque is located. A first segmentation image of the reference region may refer to an image that includes a representation of the reference region, for example, a segmentation mask of the reference region. In some embodiments, the output of the segmentation component may need to be further processed to obtain the at least one first segmentation image. For example, the segment component may output a segmentation mask of the reference region, and the processing device 140 may segment a portion corresponding to the reference region from the second medical image(s) as the first segmentation image based on the segmentation mask.

The segmentation component may include any machine learning models that can realize image segmentation functions. For example, the segmentation component may include a convolutional neural network (CNN) model, a generative adversarial network (GAN) model, or any other suitable type of model. Exemplary CNN models may include a Fully Convolutional Network, such as a deep convolution-deconvolution network (e.g., an encoder-decoder), a V-NET model, a U-NET model, etc. Exemplary GAN models may include a pix2pix model, a Wasserstein GAN (WGAN) model, a circle GAN model, etc.

In some embodiments, after obtaining the at least one first segmentation image from the segmentation component, the processing device 140 may determine the detection information of the ROI based on the second medical imaging data and the at least one first segmentation image. For example, the processing device 140 may input the second medical image(s) and the at least one first segmentation image into the detection information determination component, and the detection information determination component may output the detection information of the ROI. In some embodiments, the detection information determination component may further generate a second segmentation image of the ROI by processing the second medical imaging data and the at least one first segmentation image. The second segmentation image of the ROI may refer to an image that includes a representation of the ROI, for example, a segmentation mask of the ROI. For example, the detection information determination component may output the second segmentation image of the ROI and the detection information of the ROI together by processing the second medical image(s) and the at least one first segmentation image. As another example, the detection information determination component may output the second segmentation image of the ROI by processing the second medical image(s) and the at least one first segmentation image at first, and then output the detection information of the ROI by processing the second medical image(s), the at least one first segmentation image, and the second segmentation image.

In some embodiments, the detection information determination component may include any machine learning models that can realize the determination the detection information of the ROI (and the second segmentation image). For example, the detection information determination component may include a convolutional neural network (CNN) model, a recurrent neural network (RNN) model, a long short term memory (LSTM) network model, a fully convolutional neural network (FCN) model, a generative adversarial network (GAN) model, a radial basis function (RBF) machine learning model, a DeepMask model, a SegNet model, a dilated convolution model, a conditional random fields as recurrent neural networks (CRFasRNN) model, a pyramid scene parsing network (pspnet) model, or the like, or any combination thereof.

Merely by way of example, as illustrated in FIG. 5, FIG. 5 is a schematic diagram illustrating an exemplary second determination model 500 according to some embodiments of the present disclosure. The second determination model 500 may be configured to determine detection information of an ROI based on second medical image(s). As illustrated in FIG. 5, the second determination model 500 includes a segmentation component 510 and a detection information determination component 520. The second medical imaging data (e.g., the second medical image(s)) may be input into an input layer 512 of the segmentation component 510, and the output layer 513 of the segmentation component 510 may output the at least one first segmentation image of the reference region relating to the ROI. The at least one first segmentation image may be input into the detection information determination component 520. In some embodiments, the second medical imaging data (e.g., the second medical image(s)) may be input into the detection information determination component 520 together with the at least one first segmentation image.

Further, the detection information determination component 520 may output detection information of the ROI and/or a second segmentation image of the ROI based on its input. For example, the detection information determination component 520 may include a first output layer 522 and a second output layer 524, wherein the first output layer 522 may be configured to output the second segmentation image, and the second output layer 524 may be configured to output the detection information of the ROI.

It should be noted that the second determination model is merely provided for illustration purposes, and can be modified according to an actual need. For example, the second determination model 500 may be a single neural network model including the input layer 512, the output layer 524, and one or more convolution layers between the input layer 512 and the output layer 524. The second medical image(s) may be input into the input layer 512 of the second determination model 500, and the output layer 524 of the second determination model 500 may output the detection information of the ROI, the at least one first segmentation image of the reference region, and/or the second segmentation image of the ROI. As another example, different layers may be connected through a shortcut connection. For instance, the input layer 512 and the output layer 513 may be connected through a shortcut connection.

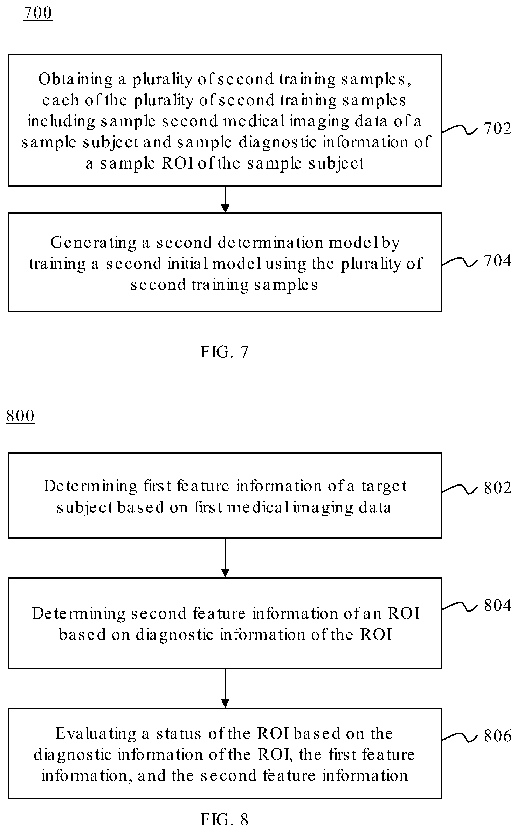

In some embodiments, the processing device 140 may obtain the second determination model from a storage device (e.g., the storage device 150) of the imaging system 100 or a third-party database. In some embodiments, the second determination model may be generated by the processing device 140 or another computing device according to a machine learning algorithm as described elsewhere in this disclosure (e.g., operation 302 and the relevant descriptions). In some embodiments, the second determination model may be generated by a computing device (e.g., the processing device 140) by performing a training process (e.g., process 700) for generating the second determination model disclosed herein. More descriptions regarding the generation of the first determination model may be found elsewhere in the present disclosure. See, e.g., FIG. 7 and relevant descriptions thereof.

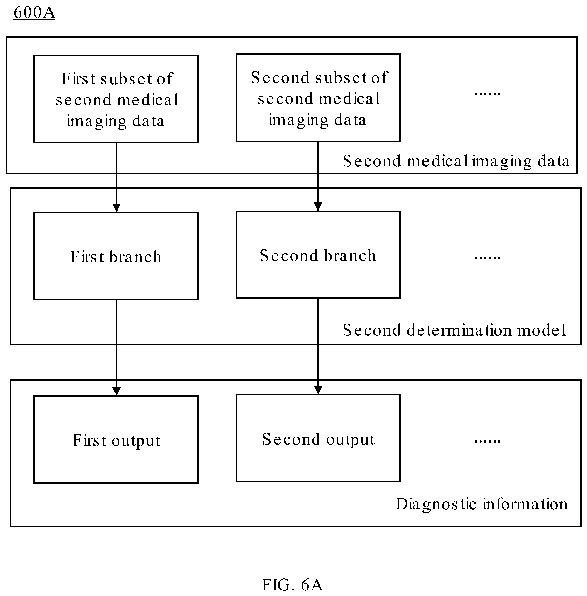

In some embodiments, as aforementioned, the second medical imaging data (e.g., the second medical image(s)) may include multiple sets of second medical imaging data (e.g., multiple medical images acquired by different imaging modalities), the processing device 140 may determine the detection information based on the multiple sets of second medical imaging data (e.g., multiple second medical images) and the second determination model. More descriptions regarding the determination of the detection information may be found elsewhere in the present disclosure. See, e.g., FIGs. 6A to 6C and relevant descriptions thereof.

In some embodiments, the processing device 140 may determine the detection information of the ROI based on the combination of the first medical imaging data and the second medical imaging data. For example, the processing device 140 may determine the detection information of the ROI by inputting the first medical image and the second medical image(s) into the second determination model. It should be understood that in such cases, each second training sample of the second determination model may further include a sample first medical image of a sample subject.

In some embodiments, the processing device 140 may evaluate a status of the ROI. For example, the status of the ROI may include a normal state of the ROI or an abnormal state of the ROI. Merely by way of example, the processing device 140 may determine first feature information of the target subject based on the first medical imaging data and second feature information of the ROI based on the detection information of the ROI. Further, the processing device 140 may evaluate the status of the ROI based on the detection information of the ROI, the first feature information, and the second feature information. More descriptions regarding the evaluation of the status of the ROI may be found in elsewhere in the present disclosure (e.g., FIG. 8 and the descriptions thereof).

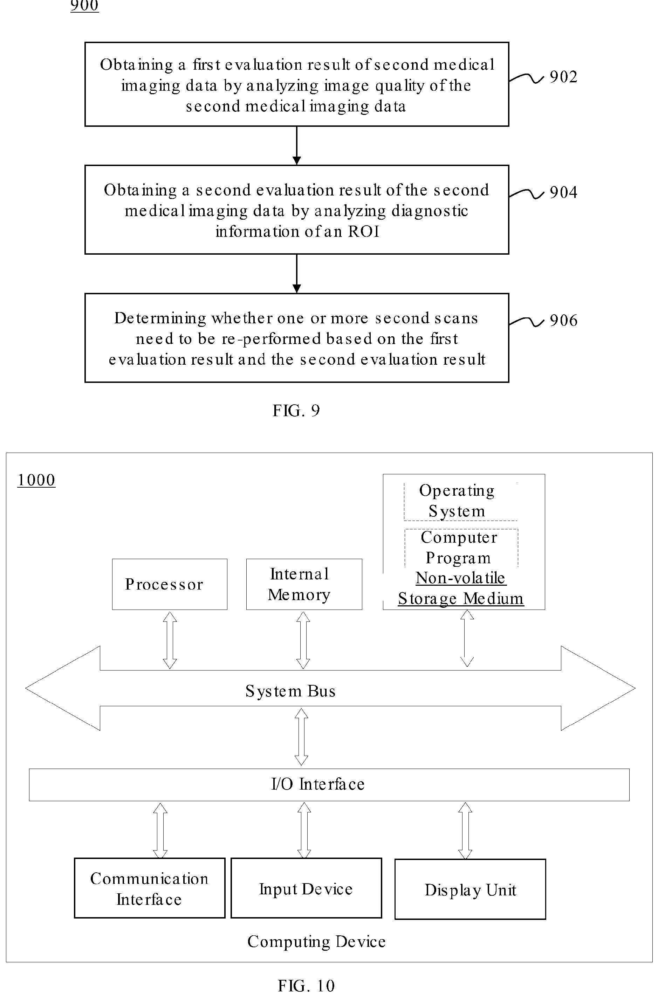

In some embodiments, the processing device 140 may determine whether the second scan(s) need to be re-performed. For example, the processing device 140 may obtain a first evaluation result of the second medical imaging data by analyzing image quality of the second medical imaging data, and obtain a second evaluation result of the second medical imaging data by analyzing the detection information of the ROI. Further, the processing device 140 may determine whether the second scan(s) need to be re-performed based on the first evaluation result and the second evaluation result. More descriptions regarding the determination of whether the second scan(s) need to be re-performed may be found in elsewhere in the present disclosure (e.g., FIG. 9 and the descriptions thereof).

According to some embodiments of the present disclosure, after the positioning information of the ROI is determined based on the first medical image, the second scan(s) with the second FOV may be performed on the target subject based on the positioning information of the ROI to acquire the second medical imaging data of the target subject, and then the detection information of the ROI may be determined based on the second medical imaging data. By determining the positioning information of the ROI, the second medical imaging data may be acquired by performing the second scan(s) with a smaller scanning range. The second medical imaging data may have a higher resolution and more detailed information of the ROI than the first medical imaging data, therefore the detection information of the ROI determined based on the second medical imaging data may have an improved accuracy and reliability. In addition, the information (e.g., the positioning information and/or the detection information) of the ROI may be determined automatically based on the first determination model and/or the second determination model, which can reduce time and/or labor consumption, and improve the efficiency and accuracy of information determination.

FIG. 6A is a schematic diagram illustrating an exemplary process 600A for determining detection information of an ROI according to some embodiments of the present disclosure. In some embodiments, the process 600A may be performed to achieve at least part of operation 306 as described in connection with FIG. 3.

In some embodiments, the second medical imaging data (e.g., the second medical image(s)) may include multiple sets of second medical imaging data (e.g., multiple second medical images), which may be divided into multiple subsets acquired by different scanning protocols (e.g., different imaging modalities, different scanning sequences). The second determination model may include a plurality of branches. Each of the plurality of branches may be configured to process one subset of the second medical imaging data (e.g., the second medical image(s)). Merely by way of example, as shown in FIG. 6A, the second medical imaging data (e.g., the second medical image(s)) may at least include a first subset acquired using a first scanning protocol (e.g., a first imaging modality, a first scanning sequence, etc.) and a second subset acquired using a second scanning protocol (e.g., a second imaging modality, a second scanning sequence, etc.) different from the first scanning protocol (e.g., the first imaging modality, the first scanning sequence, etc.). Correspondingly, the second determination model includes at least a first branch configured to process the first subset of the second medical image(s) and a second branch configured to process the second subset of the second medical image(s).

In some embodiments, the plurality of branches may process the second medical image(s) in parallel. For example, the first subset may be input into the first branch, and the first branch may output a first output; at the same time, the second subset may be input into the second branch, and the second branch may output a second output. The first output and the second output may be regarded as two parts of the detection information. For example, the first subset may include more structural information, and the first output may include the position, the shape, the size, and/or other information relating to the anatomical structure of the ROI; the second subset may include more functional information, and the second output may include the severity degree and/or other information relating to the function of the ROI.

In some embodiments, the first branch and the second branch of the second determination model may be trained separately. For example, a first subset of sample second medical imaging data (e.g., a first subset of one or more sample second medical images) may be used to train the first branch, and a second subset of the sample second medical imaging data (e.g., a second subset of the one or more sample second medical images) may be used to train the second branch.

According to some embodiments of the present disclosure, different subsets of the second medical imaging data (e.g., the second medical image(s)) may be processed by different branches, which may improve the pertinence of the image processing, and improve the accuracy of the determination of the detection information. In addition, the plurality of branches may be trained separately, which may reduce the complexity of each branch, thereby improving the efficiency and robustness of the second determination model.

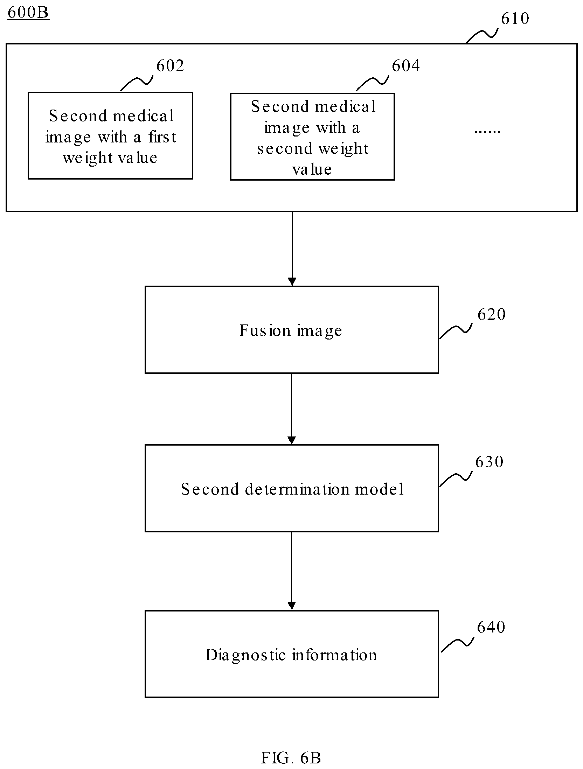

FIG. 6B is a schematic diagram illustrating an exemplary process 600B for determining detection information of an ROI according to some embodiments of the present disclosure. In some embodiments, the process 600B may be performed to achieve at least part of operation 306 as described in connection with FIG. 3.

As illustrated in FIG. 6B, in some embodiments, the second medical imaging data may include a plurality of sets of second medical imaging data (e.g., a plurality of second medical images). Each of the plurality of sets of second medical imaging data may have a weight value. The weight value of a set of second medical imaging data may indicate an impact of the set of second medical imaging data on the determination of the detection information of the ROI. For example, each of the plurality of second medical images may have a weight value. The weight value of a second medical image may indicate an impact of the second medical image on the determination of the detection information of the ROI. In some embodiments, the weight value may be associated with the target subject, the ROI, and the second medical imaging data. For example, the weight value may be determined based on features (e.g., a gender, an age, etc.) of the target subject, features (e.g., a position, an area, etc.) of the ROI, and features (e.g., an imaging modality, an imaging sequence, etc.) of the second medical image. For instance, an image acquired by using the T1CE sequence may be relatively sensitive to the plaque, and may be set to a larger weight value than an image acquired by using an imaging sequence other than the T1CE sequence. In some embodiments, the weight value corresponding to each of the plurality of sets of second medical imaging data may be determined automatically or manually. For example, the weight value corresponding to each of the plurality of second medical images may be determined using a weight determination model (e.g., a trained machine learning model). As another example, the weight value corresponding to each of the plurality of second medical images may be determined based on the type of the second medical image(s). For instance, a first type of second medical images (e.g., second medical image(s) in the first subset) may correspond to a first weight value, and a second type of second medical images (e.g., second medical image(s) in the second subset) may correspond to a second weight value. As still another example, a user may input the weight value corresponding to each of the plurality of second medical images via an input device (e.g., a writing screen, a keyboard, etc.).

The processing device 140 may obtain fusion imaging data (e.g., a fusion image) by processing the plurality of sets of second medical imaging data (e.g., the plurality of second medical images) based on the weight values of the plurality of sets of second medical imaging data (e.g., the plurality of second medical images). For example, the processing device 140 may process the plurality of second medical images based on the weight values of the plurality of second medical images and an image fusion algorithm. Exemplary image fusion algorithms may include a grayscale-based fusion algorithm, a pyramid fusion algorithm, a gradient domain fusion algorithm, a wavelet transform algorithm, a structural deformation algorithm, or the like, or any combination thereof. As another example, the processing device 140 may generate the fused image by inputting the plurality of second medical images and the weight values of the plurality of second medical images into an image fusion model (e.g., a trained machine learning model). As yet another example, the fusion image may be a weighted sum of the second medical images generated based on the weight values of the second medical images.

Further, the processing device 140 may obtain the detection information of the ROI by inputting the fusion imaging data (e.g., the fusion image) into the second determination model. Merely by way of example, as illustrated in FIG. 6B, a plurality of second medical images 610 may include a second medical image 602 with a first weight value, a second medical image 604 with a second weight value, etc. The plurality of second medical images 610 may be processed to obtain a fusion image 620. The fusion image 620 may be input into a second determination model 630, and the second determination model 630 may output detection information 640 of an ROI.

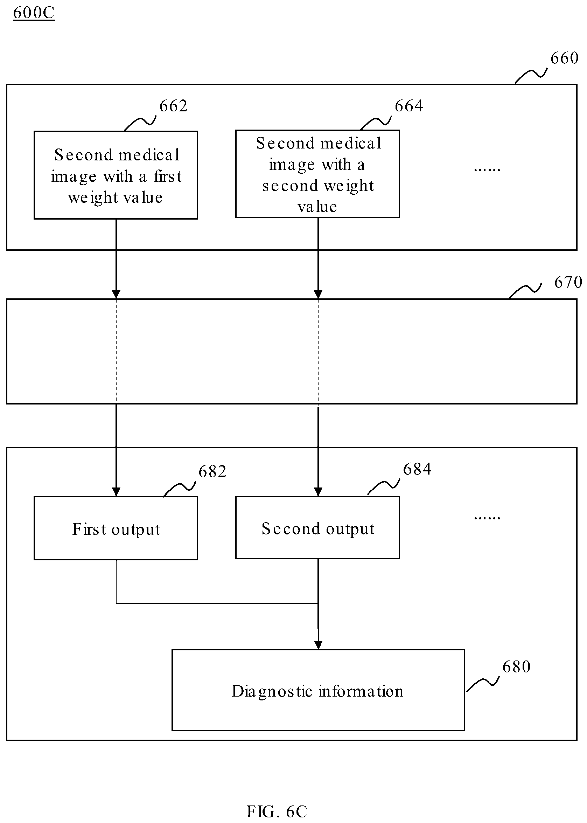

FIG. 6C is a schematic diagram illustrating an exemplary process 600C for determining detection information of an ROI according to some embodiments of the present disclosure. In some embodiments, the process 600C may be performed to achieve at least part of operation 306 as described in connection with FIG. 3.

As illustrated in FIG. 6C, the second medical imaging data may include a plurality of sets of second medical imaging data (e.g., a plurality of second medical images), and the processing device 140 may obtain preliminary detection information of the ROI by inputting each set of second medical imaging data (e.g., each second medical image) into the second determination model. The preliminary detection information of the ROI may refer to detection information that needs to be further processed (e.g., fused). The processing device 140 may further obtain the detection information of the ROI by fusing the preliminary detection information of the plurality of sets of second medical imaging data (e.g., the plurality of second medical images). For example, the processing device 140 may fuse the preliminary detection information of the plurality of second medical images based on the weight values of the plurality of second medical images to obtain the detection information of the ROI. Merely by way of example, the detection information may be a weighted sum of the preliminary detection information determined based on their respective weighted values.

Merely by way of example, as illustrated in FIG. 6C, a plurality of second medical images 660 may include a second medical image 662 with a first weight value, a second medical image 664 with a second weight value, etc. The plurality of second medical images 660 may be input into a second determination model 670, respectively, to obtain a plurality of outputs (i.e., the preliminary detection information). For example, the second medical image 662 may be input into the second determination model 670, and the second determination model 670 may output a first output 682, and the second medical image 664 may be input into the second determination model 670, and the second determination model 670 may output a second output 684. The plurality of outputs (e.g., the first output 682, the second output 684, etc.) may be fused to obtain detection information 680 of an ROI.

By introducing the weight values of the plurality of sets of second medical imaging data (e.g., the plurality of second medical images), information provided by the plurality of sets of second medical imaging data may be considered comprehensively, which can improve the accuracy of the determination of the detection information of the ROI.

FIG. 7 is a flowchart illustrating an exemplary process 700 for generating a second determination model according to some embodiments of the present disclosure. In some embodiments, the process 700 may be performed to achieve at least part of operation 306 as described in connection with FIG. 3.

In 702, the processing device 140 (e.g., the training module 240) may obtain a plurality of second training samples. Each of the plurality of second training samples may include sample second medical imaging data of a sample subject and sample detection information of a sample ROI of the sample subject.

In some embodiments, for a second training sample, the processing device 140 may obtain the sample second medical imaging data of the sample subject of the second training sample from an imaging device (e.g., the imaging device 110) or a storage device (e.g., the storage device 150, a database, or an external storage) that stores the sample second medical imaging data of the sample subject. For example, the sample second medical imaging data of the sample subject may be obtained in a similar manner as how the second medical imaging data are obtained as described in operation 304.

In some embodiments, the sample detection information of the sample ROI of the sample subject of the training sample may be determined or confirmed manually and used as a training label. For example, a user may determine the sample detection information of the sample ROI via a user terminal that displays the one or more sample second medical images. As another example, the user may modify preliminary detection information the sample ROI determined by the processing device 140 via the user terminal, and the modified preliminary detection information may be used as the sample detection information.

In some embodiments, each of the plurality of second training samples may further include at least one sample first segmentation image of a sample reference region and/or a sample second segmentation image of the sample ROI. In some embodiments, for the second training sample, the at least one sample first segmentation image and/or the sample second segmentation image may be determined manually. For example, a user may mark the sample reference region and/or the sample ROI in the one or more sample second medical images via a user terminal that displays the one or more sample second medical images. In some embodiments, the processing device 140 may determine the at least one sample first segmentation image and/or the sample second segmentation image by identifying the sample reference region and/or the sample ROI of the sample subject from the sample second medical imaging data using an image segmentation algorithm. Optionally, the at least one sample first segmentation image and/or the sample second segmentation image determined by the processing device 140 may be confirmed or modified by the user.

In 704, the processing device 140 (e.g., the training module 240) may generate a second determination model by training a second initial model using the plurality of second training samples.

In some embodiments, the second initial model may be trained according to a machine learning algorithm. For example, the processing device 140 may generate the second determination model according to a supervised machine learning algorithm by performing one or more iterations to iteratively update model parameter(s) of the second initial model.

Merely by way of example, the training of the second initial model may include an iterative process. The plurality of second training samples may be used to iteratively update the model parameter(s) of the second initial model until a termination condition is satisfied. Exemplary termination conditions may include that a value of a loss function corresponding to the second initial model is below a threshold value, a difference of values of the loss function obtained in a previous iteration and the current iteration is within a threshold value, a certain count of iterations has been performed, etc. For example, in a current iteration, one or more sample second medical images of a second training sample may be input into the second initial model, and the second initial model may output a prediction result (e.g., predicted detection information of the sample ROI of the second training sample). Then, a value of the loss function may be determined to measure a difference between the prediction result and a label (e.g., sample detection information of a sample ROI corresponding to the one or more sample second medical images). If it is determined that the termination condition is satisfied in the current iteration, the second initial model may be designated as the second determination model; otherwise, the second initial model may be further updated based on the value of the loss function.

In some embodiments, the second initial model may include a plurality of initial components (sub-initial models). For example, the second initial model may include a first preliminary component (e.g., an initial segmentation component) and a second preliminary component (e.g., an initial detection information determination component) downstream to the first preliminary component. For a second training sample, the first preliminary component may be configured to generate at least one predicted first segmentation image of the sample reference region relating to the sample ROI of the second training sample; and the second preliminary component may be configured to determine predicted detection information of the ROI and/or a predicted second segmentation image of the sample ROI based on the at least one predicted first segmentation image and the sample second medical imaging data of the second training sample.

In some embodiments, the processing device 140 (e.g., the training module 240) may determine the segmentation component and the detection information determination component by jointly training the first preliminary component and the second preliminary component using the second training samples. Merely by way of example, in each iteration of the joint training process, the value of a first loss function may be determined based on the difference between the predicted first segmentation image and the sample first segmentation image, the value of a second loss function may be determined based on a difference between the predicted detection information and the sample detection information of the ROI, and optionally a difference between the predicted second segmentation image and the sample second segmentation image. The value of the first loss function may be used to update the first preliminary component in the iteration, and the value of the second loss function may be used to update the second preliminary component in the iteration.

Alternatively, the processing device 140 (e.g., the training module 240) may determine the segmentation component and the detection information determination component by separately training the first preliminary component and the second preliminary component using the plurality of second training samples. For example, the processing device 140 may determine the segmentation component by training the first preliminary component using the one or more sample second medical images and the corresponding sample first segmentation images of the plurality of second training samples. The one or more sample second medical images of each second training sample may be input to the trained segmentation component and the output of the segmentation model (i.e., a reference first segmentation image output by the segmentation component) may be used as part of the input for the training of the detection information determination component. The processing device 140 may further determine the detection information determination component by training the second preliminary component using the sample second segmentation image(s), the reference first segmentation image, and the sample detection information of the sample ROIs of each second training sample.

It should be noted that the above description of the second training samples and the training process of the second determination model merely provided for the purposes of illustration, and not intended to limit the scope of the present disclosure. For example, when the second determination model is used to process multiple sets of second medical imaging data (e.g., multiple second medical images) including a first subset and a second subset as shown in FIG. 6A, each second training sample may include a sample first subset and a sample second subset of sample second medical imaging data (e.g., sample second medical images), and the second initial model may include a preliminary first branch corresponding to the sample first subset and a preliminary first branch corresponding to the sample second subset.

FIG. 8 is a flowchart illustrating an exemplary process 800 for evaluating a status of an ROI according to some embodiments of the present disclosure. In some embodiments, the process 800 may be performed after the process 300.

In 802, the processing device 140 (e.g., the determination module 210) may determine first feature information of a target subject based on first medical imaging data.

The first feature information may refer to information relating to global feature(s) of the target subject. Exemplary first feature information may include a shape, a length, a tortuosity, a proximal end, a distal end, a stenosis degree, etc., of a blood vessel of the target subject.

Since the first medical imaging data corresponds to a large scanning range of the target subject, the processing device 140 may determine the first feature information of the target subject based on the first medical imaging data. For example, the processing device 140 may perform feature extraction on the first medical imaging data to determine the first feature information of the target subject.

In 804, the processing device 140 (e.g., the determination module 210) may determine second feature information of an ROI based on detection information of the ROI.

The second feature information may refer to information relating to local feature(s) of the ROI. Merely by way of example, the ROI may be a plaque, and the second feature information of the ROI may include a shape, an area, a position, etc., of the plaque, a stenosis rate of a blood vessel where the plaque is located, etc.

In some embodiments, the processing device 140 may determine the second feature information of the ROI based on the detection information. For example, the processing device 140 may perform feature extraction on the detection information of the ROI to determine the second feature information of the ROI.

In 806, the processing device 140 (e.g., the determination module 210) may evaluate a status of the ROI based on the detection information of the ROI, the first feature information, and the second feature information.

The status of the ROI may indicate whether the ROI is normal and/or the abnormity degree of the ROI if the ROI is abnormal. For example, the abnormal state of the ROI may include that the ROI is a risky ROI (e.g., a plaque is prone to breakage), etc.

In some embodiments, the processing device 140 may evaluate the status of the ROI using an evaluation model which is obtained by training an initial model based on the plurality of sets of historical data. For example, the processing device 140 may input the first feature information and the second feature information into the evaluation model, the evaluation model may output the status of the ROI. In some embodiments, the processing device 140 may evaluate the status of the ROI based on detection rule(s) of the ROI. For example, the detection rule(s) may indicate a corresponding relationship between the status of the ROI, the first feature information, and the second feature information.

FIG. 9 is a flowchart illustrating an exemplary process 900 for determining whether one or more second scans need to be re-performed according to some embodiments of the present disclosure. In some embodiments, the process 900 may be performed after the process 300.

In 902, the processing device 140 (e.g., the determination module 210) may obtain a first evaluation result of second medical imaging data by analyzing image quality of the second medical imaging data.

The image quality may be analyzed based on one or more quality parameters. Exemplary quality parameters may include a signal noise ratio (SNR), a proportion of artifact regions in an ROI of the second medical imaging data (e.g., the second medical images), a resolution, a contrast, a sharpness, etc.

The SNR may be used to compare the level of desired signals to the level of noises in the second medical imaging data. In some embodiments, the SNR may refer to a ratio of signal power to the noise power in the second medical imaging data. In some embodiments, the processing device 140 may determine a parameter value of the SNR of the second medical imaging data through an approximate estimation method. For example, the processing device 140 may determine a ratio of a variance of the signals in the second medical image(s) to a variance of the noises in the second medical image(s). In some embodiments, the processing device 140 may also determine the parameter value of the SNR of the second medical imaging data in other manners, which is not limited herein.

The proportion of the artifact regions in the ROI of the second medical imaging data may refer to a ratio of an area of the artifact regions in the ROI to an area of the whole ROI. In some embodiments, the processing device 140 may determine the area of the artifact regions in the ROI based on a result of the artifact analysis, and then determine the proportion of the artifact regions in the ROI based on the area of the artifact regions and the area of the ROI. In some embodiments, the processing device 140 may determine the proportion of the artifact regions in the ROI in other manners, which is not limited herein.

In some embodiments, the processing device 140 may determine whether the one or more quality parameters satisfy a first preset condition to obtain the first evaluation result of the second medical imaging data. The first preset condition may include that the parameter value of the SNR of the second medical imaging data exceeds or reaches an SNR threshold, a parameter value of a proportion of artifact regions in the ROI does not exceed a proportion threshold, etc. In some embodiments, the SNR threshold and/or the proportion threshold may be determined based on system default setting (e.g., statistic information) or set manually by a user (e.g., a technician, a doctor, a physicist, etc.). For example, the SNR threshold and/or the proportion threshold may be input by a user through the terminal 130 and stored in the storage device 150.

The first evaluation result may include that the image quality of the second medical imaging data satisfies the first preset condition or the image quality of the second medical imaging data does not satisfy the first preset condition. For example, if the parameter value of the SNR of the second medical image(s) exceeds or reaches the SNR threshold, and the parameter value of the proportion of the artifact regions in the ROI does not exceed the proportion threshold, the processing device 140 may obtain the first evaluation result that the image quality of the second medical image(s) satisfies the first preset condition. As another example, if the parameter value of the SNR of the second medical image(s) exceeds or reaches the SNR threshold, or the parameter value of the proportion of the artifact regions in the ROI does not exceed the proportion threshold, the processing device 140 may determine the first evaluation result that the image quality of the second medical image(s) does not satisfy the first preset condition.

In 904, the processing device 140 (e.g., the determination module 210) may obtain a second evaluation result of the second medical imaging data by analyzing detection information of the ROI.

The second evaluation result may include that the detection information of the ROI satisfies a second preset condition or the detection information of the ROI does not satisfy the second preset condition.

In some embodiments, the processing device 140 may determine whether the detection information of the ROI satisfies the second preset condition to obtain the second evaluation result of the second medical imaging data. The second preset condition may include a value threshold (or a value range) of each of features of the ROI. For example, the second preset condition may include a position range of the ROI. If a position of the ROI in the detection information is within the position range, the processing device 140 may determine that the detection information of the ROI satisfies the second preset condition. If the position of the ROI in the detection information is out of the position range, the processing device 140 may determine that the detection information of the ROI does not satisfy the second preset condition. As another example, the second preset condition may include abnormal compositions of the ROI. If the ROI includes abnormal composition, the processing device 140 may determine that the detection information of the ROI does not satisfy the second preset condition. In some embodiments, the value threshold (or the value range) of each of features of the ROI may be determined based on system default setting (e.g., statistic information) or set manually by a user (e.g., a technician, a doctor, a physicist, etc.).

In 906, the processing device 140 (e.g., the determination module 210) may determine whether one or more second scans need to be re-performed based on the first evaluation result and the second evaluation result.

For example, if the first evaluation result is that the image quality of the second medical imaging data satisfies the first preset condition, and the second evaluation result is that the detection information of the ROI satisfies the second preset condition, the processing device 140 may determine that the second scan(s) do not need to be re-performed; otherwise, the processing device 140 may determine that the second scan(s) need to be re-performed. As another example, if the first evaluation result is that the image quality of the second medical imaging data satisfies the first preset condition, or the second evaluation result is that the detection information of the ROI satisfies the second preset condition, the processing device 140 may determine that the second scan(s) do not need to be re-performed; otherwise, the processing device 140 may determine that the second scan(s) need to be re-performed.

Processes 300 and 600A-900 may be implemented in the imaging system 100 illustrated in FIG. 1. For example, the processes 300 and 600A-900 may be stored in the storage device 150 in the form of instructions (e.g., an application), and invoked and/or executed by the processing device 140. The operations of the illustrated process presented below are intended to be illustrative. In some embodiments, the processes 300 and 600A-900 may be accomplished with one or more additional operations not described, and/or without one or more of the operations discussed. Additionally, the order in which the operations of the processes 300 and 600A-900 as illustrated in FIGs. 3 and 6A-9 and described below is not intended to be limiting.

For example, the processes 300 and 600A-900 may be accomplished with one or more additional operations not described, and/or without one or more of the operations discussed. Additionally, the order in which the operations of the processes 300 and 600A-900 is not intended to be limiting.

FIG. 10 is a schematic diagram illustrating an exemplary computing device 1000 according to some embodiments of the present disclosure.

In some embodiments, one or more components of the imaging system 100 may be implemented on the computing device 1000. For example, a processing engine may be implemented on the computing device 1000 and configured to implement the functions and/or methods disclosed in the present disclosure.

The computing device 1000 may include any components used to implement the imaging system 100 described in the present disclosure. For example, the processing device 140 may be implemented through hardware, software program, firmware, or any combination thereof, on the computing device 1000. For illustration purposes, only one computer is described in FIG. 10, but computing functions related to the imaging system 100 described in the present disclosure may be implemented in a distributed fashion by a group of similar platforms to spread the processing load of the imaging system 100.

The computing device 1000 may include a communication port connected to a network to achieve data communication. The computing device 1000 may include a processor (e.g., a central processing unit (CPU)), a memory, a communication interface, a display unit, and an input device connected by a system bus. The processor of the computing device 1000 may be used to provide computing and control capabilities. The memory of the computing device 1000 may include a non-volatile storage medium, an internal memory. The non-volatile storage medium may store an operating system and a computer program. The internal memory may provide an environment for the execution of the operating system and the computer program in the non-volatile storage medium. The communication interface of the computing device 1000 may be used for wired or wireless communication with an external terminal. The wireless communication may be realized through Wi-Fi, a mobile cellular network, a near field communication (NFC), etc. When the computer program is executed by the processor, a method for determining feature points may be implemented. The display unit of the computing device 1000 may include a liquid crystal display screen or an electronic ink display screen. The input device of the computing device 1000 may include a touch layer covered on the display unit, a device (e.g., a button, a trackball, a touchpad, etc.) set on the housing of the computing device 1000, an external keyboard, an external trackpad, an external mouse, etc.

Merely for illustration, only one processor is described in FIG. 10. However, it should be noted that the computing device 1000 in the present disclosure may also include multiple processors. Thus operations and/or method steps that are performed by one processor as described in the present disclosure may also be jointly or separately performed by the multiple processors. For example, if the processor of the computing device 1000 in the present disclosure executes both operation A and operation B, it should be understood that operation A and operation B may also be performed by two or more different processors jointly or separately (e.g., a first processor executes operation A and a second processor executes operation B, or the first and second processors jointly execute operations A and B).

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this disclosure are not necessarily all referring to the same embodiment. Furthermore, the particular features, structures, or characteristics may be combined as suitable in one or more embodiments of the present disclosure.

## Claims

1. A method for determining information of a region of interest (ROI) of a target subject, implemented on a computing device (1000) having at least one processor and at least one storage device (150), the method comprising:
determining positioning information of the ROI of the target subject by processing first medical imaging data of the target subject using a first determination model, the first medical imaging data being acquired by performing a first scan with a first field of view (FOV) on the target subject;
acquiring second medical imaging data of the target subject by performing one or more second scans with a second FOV on the target subject based on the positioning information of the ROI, wherein the second medical imaging data at least includes a first subset acquired using a first scanning protocol and a second subset acquired using a second scanning protocol different from the first scanning protocol; and
determining detection information of the ROI by inputting the second medical imaging data into a second determination model, wherein the second determination model is a trained machine learning model,
**characterized in that**,
the second determination model includes a first branch configured to process the first subset of the second medical imaging data and a second branch configured to process the second subset of the second medical imaging data.

2. The method of claim 1, wherein the second FOV is smaller than the first FOV

3. The method of claim 1, wherein a first resolution corresponding to the first medical imaging data is lower than a second resolution corresponding to the second medical imaging data.

4. The method of claim 1, wherein the processing first medical imaging data of the target subject using a first determination model includes:
inputting the first medical imaging data into the first determination model, the first determination model being a trained machine learning model.

5. The method of claim 4, wherein
the second determination model includes a segmentation component and a detection information determination component,
the segmentation component is configured to generate at least one first segmentation image of a reference region relating to the ROI based on the second medical imaging data, and
the detection information determination component is configured to determine the detection information of the ROI by processing the second medical imaging data and the at least one first segmentation image.

6. The method of claim 5, wherein the detection information determination component is further configured to generate a second segmentation image of the ROI by processing the second medical imaging data and the at least one first segmentation image.

7. The method of claim 1, wherein the second medical imaging data includes a plurality of sets of second medical imaging data each of which has a weight value, and the determining, based on the second medical imaging data, detection information of the ROI includes:
obtaining fusion imaging data by processing the plurality of sets of second medical imaging data based on the weight values of the plurality of sets of second medical imaging data; and
obtaining the detection information of the ROI by inputting the fusion imaging data into the second determination model.

8. The method of claim 1, wherein the second medical imaging data includes a plurality of sets of second medical imaging data, the determining, based on the second medical imaging data, detection information of the ROI includes:
for each of the plurality of sets of second medical imaging data, obtaining preliminary detection information of the ROI by inputting the set of second medical imaging data into the second determination model; and
obtaining the detection information of the ROI by fusing the preliminary detection information of the plurality of sets of second medical imaging data.

9. The method of claim 1, further comprising:
obtaining a first evaluation result of the second medical imaging data by analyzing image quality of the second medical imaging data;
obtaining a second evaluation result of the second medical imaging data by analyzing the detection information of the ROI; and
determining whether the one or more second scans need to be re-performed based on the first evaluation result and the second evaluation result.

10. The method of claim 1, further comprising:
determining first feature information of the target subject based on the first medical imaging data;
determining second feature information of the ROI based on the detection information of the ROI; and
evaluating a status of the ROI based on the detection information of the ROI, the first feature information, and the second feature information.

11. A system for determining information of an ROI of a target subject, comprising:
at least one storage device including a set of instructions; and
at least one processor configured to communicate with the at least one storage device, wherein when executing the set of instructions, the at least one processor is configured to perform the method according to any one of claims 1-10.

12. A non-transitory computer readable medium, comprising executable instructions that, when executed by at least one processor, cause the at least one processor to perform the method according to any one of claims 1-10.

## Patentansprüche

1. Verfahren zum Bestimmen von Informationen einer Region von Interesse (ROI) eines Zielsubjekts, das auf einer Computervorrichtung (1000) implementiert ist, die mindestens einen Prozessor und mindestens eine Speichervorrichtung (150) aufweist, das Verfahren umfassend:
Bestimmen von Positionierungsinformationen der ROI des Zielsubjekts durch Verarbeiten erster medizinischer Bildgebungsdaten des Zielsubjekts unter Verwendung eines ersten Bestimmungsmodells, wobei die ersten medizinischen Bildgebungsdaten durch Durchführen eines ersten Scans mit einem ersten Sichtfeld (FOV) an dem Zielsubjekt erfasst werden;
Erfassen zweiter medizinischer Bildgebungsdaten des Zielsubjekts durch Durchführen eines oder mehrerer zweiter Scans mit einem zweiten FOV an dem Zielsubjekt basierend auf den Positionierungsinformationen der ROI, wobei die zweiten medizinischen Bildgebungsdaten mindestens einen ersten Teilsatz, der unter Verwendung eines ersten Scanprotokolls erfasst wurde, und einen zweiten Teilsatz, der unter Verwendung eines zweiten, von dem ersten verschiedenen Scanprotokolls erfasst wurde, beinhalten; und
Bestimmen von Detektionsinformationen der ROI durch Eingeben der zweiten medizinischen Bildgebungsdaten in ein zweites Bestimmungsmodell, wobei das zweite Bestimmungsmodell ein trainiertes maschinelles Lernmodell ist,
**dadurch gekennzeichnet, dass**
das zweite Bestimmungsmodell einen ersten Zweig, der konfiguriert ist, den ersten Teilsatz der zweiten medizinischen Bildgebungsdaten zu verarbeiten, und einen zweiten Zweig, der konfiguriert ist, den zweiten Teilsatz der zweiten medizinischen Bildgebungsdaten zu verarbeiten, beinhaltet.

2. Verfahren nach Anspruch 1, wobei das zweite FOV kleiner ist als das erste FOV.

3. Verfahren nach Anspruch 1, wobei eine erste Auflösung, die den ersten medizinischen Bildgebungsdaten entspricht, niedriger ist als eine zweite Auflösung, die den zweiten medizinischen Bildgebungsdaten entspricht.

4. Verfahren nach Anspruch 1, wobei das Verarbeiten der ersten medizinischen Bildgebungsdaten des Zielsubjekts unter Verwendung eines ersten Bestimmungsmodells beinhaltet:
Eingeben der ersten medizinischen Bildgebungsdaten in das erste Bestimmungsmodell, wobei das erste Bestimmungsmodell ein trainiertes maschinelles Lernmodell ist.

5. Verfahren nach Anspruch 4, wobei
das zweite Bestimmungsmodell eine Segmentierungskomponente und eine Komponente zum Bestimmen von Detektionsinformationen beinhaltet,
die Segmentierungskomponente konfiguriert ist, mindestens ein erstes Segmentierungsbild einer Referenzregion, die sich auf die ROI bezieht, basierend auf den zweiten medizinischen Bildgebungsdaten zu erzeugen, und
die Komponente zum Bestimmen von Detektionsinformationen konfiguriert ist, die Detektionsinformationen der ROI durch Verarbeiten der zweiten medizinischen Bildgebungsdaten und des mindestens einen ersten Segmentierungsbilds zu bestimmen.

6. Verfahren nach Anspruch 5, wobei die Komponente zum Bestimmen von Detektionsinformationen weiter konfiguriert ist, ein zweites Segmentierungsbild der ROI durch Verarbeiten der zweiten medizinischen Bildgebungsdaten und des mindestens einen ersten Segmentierungsbilds zu erzeugen.

7. Verfahren nach Anspruch 1, wobei die zweiten medizinischen Bildgebungsdaten eine Vielzahl von Sätzen zweiter medizinischer Bildgebungsdaten beinhalten, von denen jeder einen Gewichtungswert aufweist, und das Bestimmen von Detektionsinformationen der ROI basierend auf den zweiten medizinischen Bildgebungsdaten beinhaltet:
Erhalten von Fusionsbildgebungsdaten durch Verarbeiten der Vielzahl von Sätzen zweiter medizinischer Bildgebungsdaten basierend auf den Gewichtungswerten der Vielzahl von Sätzen zweiter medizinischer Bildgebungsdaten; und
Erhalten der Detektionsinformationen der ROI durch Eingeben der Fusionsbildgebungsdaten in das zweite Bestimmungsmodell.

8. Verfahren nach Anspruch 1, wobei die zweiten medizinischen Bildgebungsdaten eine Vielzahl von Sätzen zweiter medizinischer Bildgebungsdaten beinhalten, wobei das Bestimmen von Detektionsinformationen der ROI basierend auf den zweiten medizinischen Bildgebungsdaten beinhaltet:
für jeden der Vielzahl von Sätzen zweiter medizinischer Bildgebungsdaten, Erhalten vorläufiger Detektionsinformationen der ROI durch Eingeben des Satzes zweiter medizinischer Bildgebungsdaten in das zweite Bestimmungsmodell; und
Erhalten der Detektionsinformationen der ROI durch Fusionieren der vorläufigen Detektionsinformationen der Vielzahl von Sätzen zweiter medizinischer Bildgebungsdaten.

9. Verfahren nach Anspruch 1, weiter umfassend:
Erhalten eines ersten Auswertungsergebnisses der zweiten medizinischen Bildgebungsdaten durch Analysieren von Bildqualität der zweiten medizinischen Bildgebungsdaten;
Erhalten eines zweiten Auswertungsergebnisses der zweiten medizinischen Bildgebungsdaten durch Analysieren der Detektionsinformationen der ROI; und
Bestimmen, ob der eine oder die mehreren zweiten Scans erneut durchzuführen sind, basierend auf dem ersten Auswertungsergebnis und dem zweiten Auswertungsergebnis.

10. Verfahren nach Anspruch 1, weiter umfassend:
Bestimmen erster Merkmalsinformationen des Zielsubjekts basierend auf den ersten medizinischen Bildgebungsdaten;
Bestimmen zweiter Merkmalsinformationen der ROI basierend auf den Detektionsinformationen der ROI; und
Auswerten eines Status der ROI basierend auf den Detektionsinformationen der ROI, der ersten Merkmalsinformationen und der zweiten Merkmalsinformationen.

11. System zum Bestimmen von Informationen einer ROI eines Zielsubjekts, umfassend:
mindestens eine Speichervorrichtung, die einen Satz von Anweisungen beinhaltet; und
mindestens einen Prozessor, der konfiguriert ist, mit der mindestens einen Speichervorrichtung zu kommunizieren, wobei beim Ausführen des Satzes von Anweisungen der mindestens eine Prozessor konfiguriert ist, das Verfahren nach einem der Ansprüche 1-10 durchzuführen.

12. Nichtflüchtiges computerlesbares Medium, das ausführbare Anweisungen umfasst, die, wenn sie durch mindestens einen Prozessor ausgeführt werden, den mindestens einen Prozessor veranlassen, das Verfahren nach einem der Ansprüche 1-10 durchzuführen.

## Revendications

1. Procédé de détermination d'informations sur une région d'intérêt (ROI) d'un sujet cible, mis en œuvre sur un dispositif informatique (1000) présentant au moins un processeur et au moins un dispositif de stockage (150), le procédé comprenant :
la détermination d'informations de positionnement de la ROI du sujet cible en traitant des premières données d'imagerie médicale du sujet cible à l'aide d'un premier modèle de détermination, les premières données d'imagerie médicale étant acquises en effectuant un premier balayage avec un premier champ de vision (FOV) sur le sujet cible ;
l'acquisition de secondes données d'imagerie médicale du sujet cible en effectuant un ou plusieurs seconds balayages avec un second FOV sur le sujet cible, sur la base des informations de positionnement de la ROI, dans lequel les secondes données d'imagerie médicale incluent au moins un premier sous-ensemble acquis à l'aide d'un premier protocole de balayage et un second sous-ensemble acquis à l'aide d'un second protocole de balayage différent du premier protocole de balayage ;
la détermination d'informations de détection de la ROI en entrant les secondes données d'imagerie médicale dans un second modèle de détermination, dans lequel le second modèle de détermination est un modèle d'apprentissage automatique entraîné,
**caractérisé en ce que**,
le second modèle de détermination inclut une première branche configurée pour traiter le premier sous-ensemble des secondes données d'imagerie médicale et une seconde branche configurée pour traiter le second sous-ensemble des secondes données d'imagerie médicale.

2. Procédé selon la revendication 1, dans lequel le second FOV est plus petit que le premier FOV.

3. Procédé selon la revendication 1, dans lequel une première résolution correspondant aux premières données d'imagerie médicale est plus faible qu'une seconde résolution correspondant aux secondes données d'imagerie médicale.

4. Procédé selon la revendication 1, dans lequel le traitement des premières données d'imagerie médicale du sujet cible à l'aide d'un premier modèle de détermination inclut :
l'entrée des premières données d'imagerie médicale dans le premier modèle de détermination, le premier modèle de détermination étant un modèle d'apprentissage automatique entraîné.

5. Procédé selon la revendication 4, dans lequel
le second modèle de détermination inclut un composant de segmentation et un composant de détermination d'informations de détection,
le composant de segmentation est configuré pour générer au moins une première image de segmentation d'une région de référence se rapportant à la ROI sur la base des secondes données d'imagerie médicale, et
le composant de détermination d'informations de détection est configuré pour déterminer les informations de détection de la ROI en traitant les secondes données d'imagerie médicale et au moins une première image de segmentation.

6. Procédé selon la revendication 5, dans lequel le composant de détermination d'informations de détection est en outre configuré pour générer une seconde image de segmentation de la ROI en traitant les secondes données d'imagerie médicale et au moins une première image de segmentation.

7. Procédé selon la revendication 1, dans lequel les secondes données d'imagerie médicale incluent une pluralité d'ensembles de secondes données d'imagerie médicale, chacun présentant une valeur de pondération, et la détermination, sur la base des secondes données d'imagerie médicale, d'informations de détection de la ROI inclut :
l'obtention de données d'imagerie de fusion en traitant la pluralité d'ensembles de secondes données d'imagerie médicale sur la base des valeurs de pondération de la pluralité d'ensembles de secondes données d'imagerie médicale ; et
l'obtention des informations de détection de la ROI en entrant les données d'imagerie de fusion dans le second modèle de détermination.

8. Procédé selon la revendication 1, dans lequel les secondes données d'imagerie médicale incluent une pluralité d'ensembles de secondes données d'imagerie médicale, la détermination, sur la base des secondes données d'imagerie médicale, d'informations de détection de la ROI déterminantes inclut :
pour chaque ensemble de la pluralité d'ensembles de secondes données d'imagerie médicale, l'obtention d'informations de détection préliminaires de la ROI en entrant l'ensemble de secondes données d'imagerie médicale dans le second modèle de détermination ; et
l'obtention des informations de détection de la ROI en fusionnant les informations de détection préliminaires de la pluralité d'ensembles de secondes données d'imagerie médicale.

9. Procédé selon la revendication 1, comprenant en outre :
l'obtention d'un premier résultat d'évaluation des secondes données d'imagerie médicale en analysant une qualité d'image des secondes données d'imagerie médicale ;
l'obtention d'un second résultat d'évaluation des secondes données d'imagerie médicale en analysant les informations de détection de la ROI ; et
la détermination pour savoir si les un ou plusieurs seconds balayages doivent être effectués à nouveau sur la base du premier résultat d'évaluation et du second résultat d'évaluation.

10. Procédé selon la revendication 1, comprenant en outre :
la détermination de premières informations caractéristiques du sujet cible sur la base des premières données d'imagerie médicale ;
la détermination de secondes informations caractéristiques de la ROI sur la base des informations de détection de la ROI ; et
l'évaluation d'un état de la ROI sur la base des informations de détection de la ROI, des premières informations caractéristiques et des secondes informations caractéristiques.

11. Système pour déterminer des informations d'une ROI d'un sujet cible, comprenant :
au moins un dispositif de stockage incluant un ensemble d'instructions ; et
au moins un processeur configuré pour communiquer avec le au moins un dispositif de stockage, dans lequel, lors de l'exécution de l'ensemble d'instructions, le au moins un processeur est configuré pour réaliser le procédé selon l'une quelconque des revendications 1-10.

12. Support non transitoire lisible par ordinateur, comprenant des instructions exécutables qui, lorsqu'elles sont exécutées par au moins un processeur, amènent le au moins un processeur à réaliser le procédé selon l'une quelconque des revendications 1-10.
